# EUROPEAN PATENT APPLICATION

(11) **EP 4 534 349 A1**
(43) Date of publication of application: **09.04.2025**
(21) Application number: 23811847.5
(22) Date of filing: 24.05.2023
(51) Int. Cl.: B60N 2/90, A47C 7/62, B60N 2/879

(54) **VEHICLE INTERIOR DEVICE AND VEHICLE**

(30) Priority: 25.05.2022 US 202263345543 P; 22.05.2023 JP 2023084150
(71) Applicant: TS Tech Co., Ltd., Asaka-shi Saitama 351-0012 (JP)
(72) Inventor: OSHINO, Yuta, Shioya-gun, Tochigi 329-1217 (JP)
(74) Representative: Grünecker Patent- und Rechtsanwälte PartG mbB
(86) International application number: PCT/JP2023/019332
(87) International publication number: WO 2023/228975

(57) **Abstract**

A conveyance interior device and a conveyance including an electrical component capable of changing a function without replacing a control device are provided. A conveyance interior device (M) includes: an interior member (S); at least one electrical component (21) provided in the interior member; and a control device (10), wherein the control device includes a control unit (11) controlling the electrical component, a storage unit (12), and a communication unit (13), wherein the storage unit stores a first control program (P1) for controlling the electrical component as a device that executes a first function, wherein the control unit controls the electrical component as a device that executes the first function by the first control program in an initial state, and when the first control program is updated to a second control program (P2) based on data received from a server (100) provided outside a conveyance via the communication unit, the control unit controls the electrical component as a device that executes a second function different from the first function by the second control program.

## Description

### TECHNICAL FIELD

The present invention relates to a conveyance interior device and a conveyance, and particularly to a conveyance interior device and a conveyance including an electrical component.

### BACKGROUND ART

PATENT LITERATURE 1 discloses a vehicle seat that is provided with electrical components such as a vibrator and notifies an occupant of information acquired when detecting the approach of another vehicle by using the vibrator or the like.

In the vehicle seat described in PATENT LITERATURE 1, although the electrical components are used for notifying information, the use of the electrical components is not limited thereto, and the electrical components can also be used for other purposes. For example, the vibrator may be used for entertainment purposes.

### CITATION LIST

### PATENT LITERATURE

PATENT LITERATURE 1: WO 2019/044826

### SUMMARY OF INVENTION

### TECHNICAL PROBLEM

However, in the conventional electrical components, it was difficult to change the usage method of the electrical components, that is, to add a different function to the electrical components or change their functions unless the control unit (ECU) having a program embedded therein was also replaced.

The present invention has been made in view of the above-described problems and an object thereof is to provide a conveyance interior device and a conveyance including an electrical component capable of changing a function without replacing a control device.

### SOLUTION TO PROBLEM

According to a conveyance interior device of the present invention, the above-described problems are solved by a conveyance interior device mounted on a conveyance including: an interior member; at least one electrical component provided in the interior member; and a control device, wherein the control device includes a control unit controlling the electrical component, a storage unit, and a communication unit, wherein the storage unit stores a first control program for controlling the electrical component as a device that executes a first function, wherein the control unit controls the electrical component as a device that executes the first function by the first control program in an initial state, and wherein when the first control program is updated to a second control program based on data received from a server provided outside the conveyance via the communication unit, the control unit controls the electrical component as a device that executes a second function different from the first function by the second control program.

Since the control unit of the control device controls the electrical component as a device having the second function by updating the first control program stored in the storage unit of the control device to the second control program, it is possible to provide the conveyance interior device including the electrical component capable of changing a function without replacing the control device (ECU). Since there is no need to replace the control device, for example, there is no need to go to a dealer to replace the control device, which is economical and allows functions to be added or changed quickly. Further, new functions can be added one after another by updating the control program.

Further, in the above-described configuration, the second function may be a function that provides an effect different from that of the first function.

It is possible to use the existing electrical component as a more convenient device by adding the second function that provides an effect different from the first function to the electrical component.

Further, in the above-described configuration, the interior member may be a conveyance seat, and the electrical component may be provided in the conveyance seat.

It is possible to provide more convenient services to the occupant seated on the conveyance seat by updating the functions of the electrical components provided in the conveyance seat.

Further, in the above-described configuration, the electrical component may be a vibrator provided in the conveyance seat, the first function may be a function that notifies an occupant seated on the conveyance seat of information by vibration, and the second function may be a function that vibrates in conjunction with a sound played inside the conveyance.

Since it is possible to add a function to vibrate in conjunction with sound for the occupant to an existing vibrator without replacing the control device (ECU), it is possible to provide entertainment for the occupant.

Further, in the above-described configuration, the conveyance seat may include a headrest speaker provided in a headrest, and the second function may have a function of vibrating in conjunction with a sound output from the headrest speaker.

A vibration can be provided for the occupant to feel more integrated with the sound by providing a vibration function that is linked to the sound coming from the headrest speaker.

Further, in the above-described configuration, the electrical component may be a seat belt reminder, the first function may be a function of detecting a load of an occupant seated on the conveyance seat, and the second function may be a function of measuring a respiratory rate of the occupant from the body movement of the occupant or a function of measuring a body pressure distribution of the occupant.

The respiratory rate or body pressure distribution of the occupant can be acquired without replacing the control device (ECU).

Further, in the above-described configuration, the conveyance seat may include an air cell device for kneading the occupant, and the second function may include a function of measuring a respiratory rate of the occupant from the body movement of the occupant using the seat belt reminder and kneading the occupant based on the measured respiratory rate using the air cell device.

For example, the physical condition of the occupant can be estimated by measuring the respiratory rate, and the physical tension of the occupant can be more effectively relieved by kneading the occupant based on the physical condition of the occupant.

Further, in the above-described configuration, the second function may include a function of measuring a body pressure distribution of the occupant using the seat belt reminder and transmitting the measured body pressure distribution to a mobile terminal carried by the occupant via the communication unit.

The posture of the occupant can be determined by measuring the body pressure distribution. Therefore, the occupant can check his or her posture based on the information by transmitting the body pressure distribution to the mobile terminal.

Further, in the above-described configuration, the electrical component may be a seat weight sensor, the first function may be a function of detecting a load of an occupant seated on the conveyance seat, and the second function may be a function of estimating a weight of the occupant seated on the conveyance seat.

The weight of the occupant can be acquired without replacing the control device (ECU).

Further, in the above-described configuration, the second function may include a function of transmitting the weight of the occupant estimated by the seat weight sensor to a mobile terminal carried by the occupant via the communication unit.

The occupant can manage the weight by the mobile terminal by transmitting the weight of the occupant to the mobile terminal of the occupant.

Further, the above-described problems are solved by a conveyance including a conveyance interior device having the above-described configuration.

It is possible to provide the conveyance including the conveyance interior device capable of causing the electrical component to perform a different function without replacing the control device (ECU).

### ADVANTAGEOUS EFFECTS OF INVENTION

According to the conveyance interior device of the present invention, since the control unit of the control device controls the electrical component as a device having the second function by updating the first control program stored in the storage unit of the control device to the second control program, it is possible to provide the conveyance interior device including the electrical component capable of changing a function without replacing the control device (ECU). Since there is no need to replace the control device, for example, there is no need to go to a dealer to replace the control device, which is economical and allows functions to be added or changed quickly. Further, new functions can be added one after another by updating the control program.

Further, according to the conveyance interior device of the present invention, it is possible to use the existing electrical component as a more convenient device by adding the second function that provides an effect different from the first function to the electrical component.

Further, according to the conveyance interior device of the present invention, it is possible to provide more convenient services to the occupant seated on the conveyance seat by updating the functions of the electrical components provided in the conveyance seat.

Further, according to the conveyance interior device of the present invention, since it is possible to add a function to vibrate in conjunction with sound for the occupant to an existing vibrator without replacing the control device (ECU), it is possible to provide entertainment for the occupant.

Further, according to the conveyance interior device of the present invention, a vibration can be provided for the occupant to feel more integrated with the sound by providing a vibration function that is linked to the sound coming from the headrest speaker.

Further, according to the conveyance interior device of the present invention, the respiratory rate or body pressure distribution of the occupant can be acquired without replacing the control device (ECU).

Further, according to the conveyance interior device of the present invention, for example, the physical condition of the occupant can be estimated by measuring the respiratory rate, and the physical tension of the occupant can be more effectively relieved by kneading the occupant based on the physical condition of the occupant.

Further, according to the conveyance interior device of the present invention, the posture of the occupant can be determined by measuring the body pressure distribution. Therefore, the occupant can check his or her posture based on the information by transmitting the body pressure distribution to the mobile terminal.

Further, according to the conveyance interior device of the present invention, the weight of the occupant can be acquired without replacing the control device (ECU).

Further, according to the conveyance interior device of the present invention, the occupant can manage the weight by the mobile terminal by transmitting the weight of the occupant to the mobile terminal of the occupant.

Further, according to the conveyance of the present invention, it is possible to provide the conveyance including the conveyance interior device capable of causing the electrical component to perform a different function without replacing the control device (ECU).

### BRIEF DESCRIPTION OF DRAWINGS

[FIG. 1] FIG. 1 is a schematic diagram showing a configuration of a conveyance including a conveyance interior device according to an embodiment of the present invention.
[FIG. 2] FIG. 2 is a perspective view showing a door and a conveyance seat of a conveyance interior device of a first embodiment.
[FIG. 3] FIG. 3 is a block diagram showing a function of the conveyance interior device in an initial state.
[FIG. 4] FIG. 4 is a block diagram showing a function of the conveyance interior device in which a control program has been updated.
[FIG. 5] FIG. 5 is a block diagram showing a configuration of a vibration ECU circuit.
[FIG. 6] FIG. 6 is a perspective view showing a conveyance seat of a conveyance interior device of a second embodiment.
[FIG. 7] FIG. 7 is a block diagram showing a function of the conveyance interior device in an initial state.
[FIG. 8] FIG. 8 is a block diagram showing a function of the conveyance interior device in which a control program has been updated.
[FIG. 9] FIG. 9 is a diagram showing a seat weight sensor provided in a conveyance interior device of a third embodiment.
[FIG. 10] FIG. 10 is a block diagram showing a function of the conveyance interior device in an initial state.
[FIG. 11] FIG. 11 is a block diagram showing a function of the conveyance interior device in which a control program has been updated.

### DESCRIPTION OF EMBODIMENTS

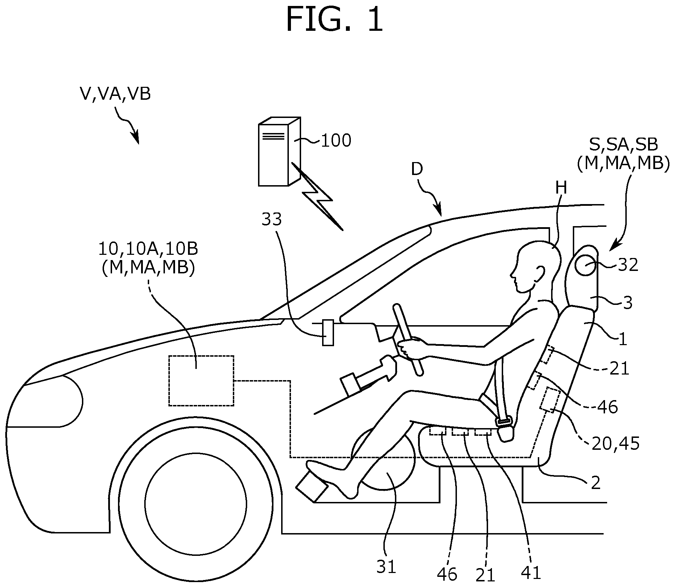

Hereinafter, a conveyance interior device M according to embodiments of the present invention will be described with reference to FIGS. 1 to 11. However, the embodiments described below are intended to facilitate understanding of the present invention and are not intended to limit the present invention. In other words, the present invention can be modified or improved without departing from the spirit thereof, and it goes without saying that the present invention includes equivalents thereof.

Further, in the following description, the contents regarding the materials, shapes, and sizes of the parts constituting the conveyance interior device M are merely examples and do not limit the present invention.

Further, a conveyance seat S is taken as an example of an interior member provided in the conveyance interior device M, and an example of the configuration thereof will be described.

In the following description, the "front to rear direction" refers to the front to rear direction of the conveyance seat S, which coincides with the traveling direction of the conveyance V in a traveling state. In addition, the "seat width direction" refers to the lateral width direction of the conveyance seat S, which coincides with the right to left direction as seen by an occupant seated on the conveyance seat S. Further, the "up to down direction" refers to the up to down direction of the conveyance seat S, which coincides with the vertical direction when the conveyance V is traveling on a horizontal plane.

Furthermore, the shape, position, posture and the like of each part of the conveyance seat S described below will be described assuming that the conveyance seat S is in an occupant's seated position unless otherwise specified.

The conveyance seat S of the conveyance interior device M of this embodiment is a seat that is mounted on the conveyance V and on which an occupant H riding in the conveyance V is seated as shown in FIG. 1.

The conveyance V is a four-wheeled vehicle, and is assumed to be a standard passenger car, but the present invention can be applied to any type of vehicle, such as a station wagon or a sport utility vehicle. In addition, the conveyance V is not limited to an engine vehicle, and may be an electric vehicle (EV). The conveyance V may be an autonomous vehicle. In addition, the conveyance V is not limited to a four-wheeled vehicle, and may be, for example, a three-wheeled vehicle or a two-wheeled motorcycle.

As shown in FIG. 1, the conveyance V includes the conveyance seat S and a conveyance door D in a vehicle compartment. Further, a speaker 31, a monitor 33, and the like are mounted as electrical components. An ECU (Electronic Control Unit) 10 is provided in the instrument panel, and the engine, as well as electrical components such as the speaker 31 and the monitor 33, are controlled by the ECU 10. Furthermore, the ECU 10 corresponds to the control device of the present invention.

The ECU 10 incorporates a control circuit for controlling various electrical components. The ECU 10 includes a CPU (Central Processing Unit) as a data calculation and control processing device, a ROM (Read Only Memory), a RAM (Random Access Memory), an SSD, and an HDD (Hard Disk Drive) as storage devices. Further, the ECU 10 also includes a communication interface for receiving information and signals from electrical components and transmitting signals for operating the electrical components. These components are connected to each other via a bus so that they can communicate with each other.

Furthermore, the ECU 10 may be a control device for advanced driver-assistance systems (ADAS).

The ECU 10 includes, as its functional components, a control unit 11 that controls electrical components (such as a vibrator 21 and a seat belt reminder 41), a storage unit 12, and a communication unit 13. The storage unit 12 stores setting files and programs for controlling various electrical components. The control unit 11 reads the setting files and programs stored in the storage unit 12 and operates the electrical components.

The control unit 11 is realized by a CPU, and the storage unit 12 is realized by a storage device. The communication unit 13 is realized by a communication interface, and can perform a wireless communication operation (OTA: Over The Air) with an OTA server 100 (server) installed outside the conveyance V and a mobile terminal 101 carried by the occupant H in addition to a wired communication operation with electrical components in the conveyance V. The ECU 10 can update setting files, programs, etc. stored in the storage unit 12 via OTA.

The storage unit 12 of the ECU 10 stores a first control program P1 for controlling the electrical components mounted on the conveyance V as devices that execute a first function, which is an initial function in an initial state (e.g., at the time of purchasing the vehicle). In the initial state, the control unit 11 controls the electrical components as devices that execute a first function by a first control program P1.

Then, if the owner instructs the addition of a function to the electrical components after purchasing the conveyance V, the ECU 10 receives data received from the OTA server 100, for example, a second control program P2. Thereafter, the ECU 10 updates the first control program P1 stored in the storage unit 12 to the second control program P2.

When the first control program P1 is updated to the second control program P2, the control unit 11 can control the electrical component as a device that executes a second function different from the first function by the second control program P2.

Conventionally, in order to add a function to an electrical component (such as the vibrator 21 or the seat belt reminder 41) or to use the function for a different purpose, it was necessary to replace the entire ECU in which the program that controls the electrical component is embedded.

Since the ECU 10 provided in the conveyance interior device of this embodiment is equipped with a communication unit capable of communicating with an external server, and the setting files and programs stored in the ECU 10 can be updated via OTA, there is no need to replace the ECU 10 itself to give another function to an electrical component.

That is, the occupant H does not need to take the conveyance to a dealer or a repair shop to replace the ECU 10. That is, the provider of the conveyance V can provide a product service after the sale without going through a dealer or the like. Also, the occupant H can add new functions depending on the performance of the ECU 10.

### <First embodiment>

Hereinafter, as a first embodiment, a case in which an electrical component is the vibrator 21 provided in the conveyance seat S will be described with reference to FIGS. 1 to 5.

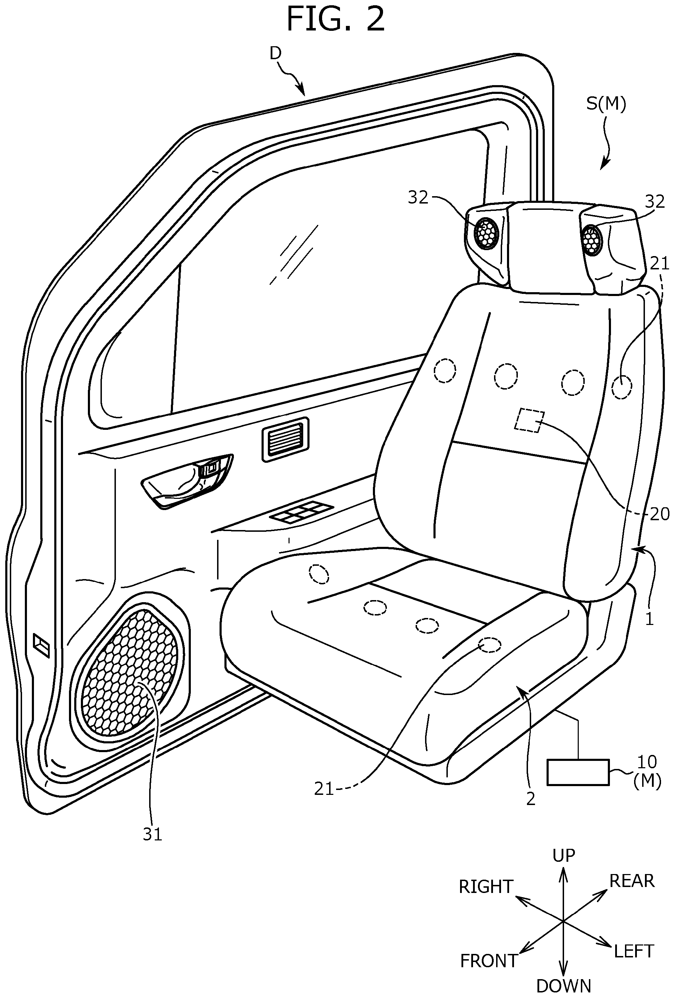

As shown in FIGS. 1 and 2, the conveyance seat S is composed of a seat back 1 that supports the back of the seated occupant H, a seat cushion 2 that supports the buttocks of the occupant H, and a headrest 3 that supports the head of the occupant H.

The vibrator 21 is provided on the seat back 1 and the seat cushion 2, and can be vibrated by a vibration ECU circuit 20. The vibration ECU circuit 20 is connected to the ECU 10 via an in-vehicle network, and in the initial state, for example, when the conveyance V is purchased, the vibration ECU circuit 20 has a function (first function) of vibrating the vibrator 21 and notifying the warning only to a seated occupant (for example, the driver) when a warning signal is received from the ECU 10.

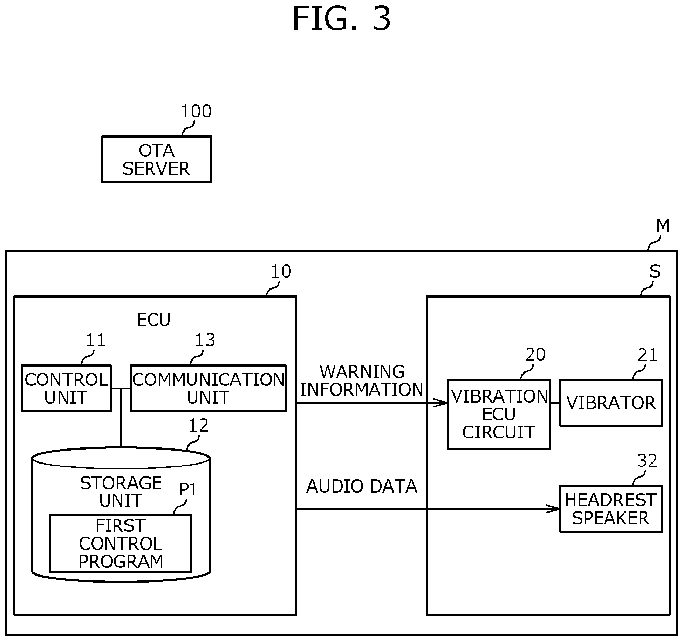

In other words, as shown in FIG. 3, the ECU 10 controls the vibrator 21 as a device that executes a first function of notifying the occupant seated on the conveyance seat S of information by vibration, using the first control program P1 initially stored in the storage unit 12.

That is, when the vehicle is purchased, the conveyance seat S is equipped with a vibration HMI (Human Machine Interface) as a safety function.

Further, a headrest speaker 32 is provided in the headrest of the conveyance seat S, and is capable of receiving audio data from the ECU 10 and generating warning sounds and music.

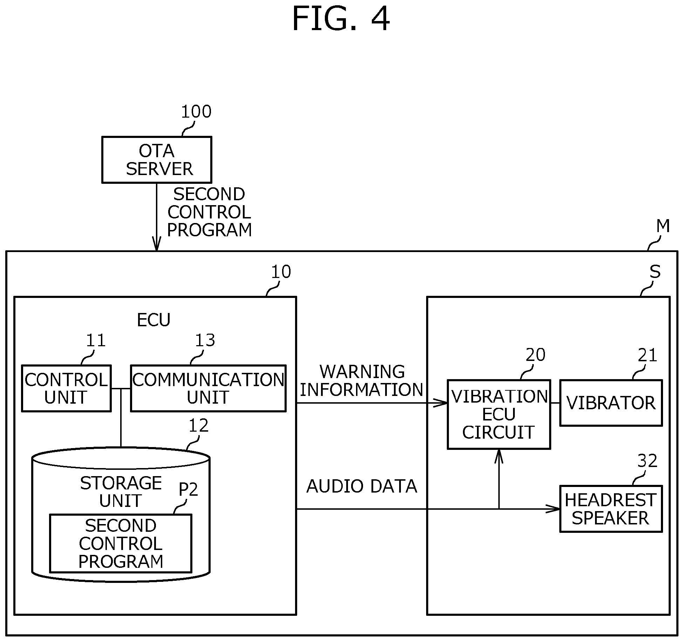

Then, if the occupant (owner of the conveyance) desires to update the function of the vibrator 21 after purchasing the conveyance V, as shown in FIG. 4, the ECU 10 downloads the second control program from the OTA server 100 via the communication unit 13 by wireless communication. Then, the first control program P1 stored in the storage unit 12 is updated to the second control program P2.

The second control program P2 is further provided with a second function, which is a function of vibrating in conjunction with the sound (especially low-pitched sounds) played inside the conveyance. It is also possible to have the information notification function (first function) that is originally installed coexist with the vibration function (second function) linked to voice.

More specifically, as shown in FIG. 4, the ECU 10 transmits audio data (for example, music or virtual engine sound) to the headrest speaker 32 as well as to the vibration ECU circuit 20 according to the second control program P2.

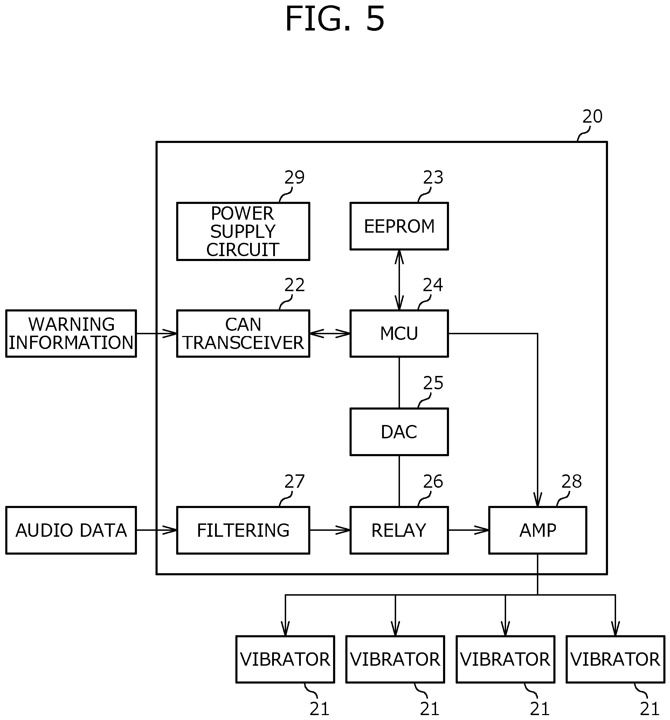

When the received audio data is music, the vibration ECU circuit 20 extracts the low-pitched sound part (for example, the bass or drum area with a frequency of 20 Hz to 600 Hz) by a filtering circuit 27 (see FIG. 5) and vibrates the vibrator 21 in accordance with the extracted frequency. The occupant H can feel the low-pitched sound part of the music through vibrations, and can experience the same sense of realism as if he or she were at a live concert.

Furthermore, the audio data transmitted by the ECU 10 may be a virtual engine sound that imitates the engine sound of a sports car. By updating to the second control program P2, frequency information that imitates the engine sound of a sports car is stored in the storage unit 12 of the ECU 10. As for the engine sound, data of a plurality of sports cars may be stored.

The ECU 10 acquires actual engine output information from a vehicle body ECU (not shown) that controls the engine, and outputs a virtual engine sound from the headrest speaker 32 in accordance with the actual engine output. At this time, the vibration ECU circuit 20 receives the virtual engine sound and vibrates the vibrator 21 in accordance with the strength and duration of the virtual engine sound.

A virtual engine sound of a sports car is generated in accordance with the actual engine output, and the vibrator 21 is vibrated to be linked with the lower engine sound, thereby giving the occupant a feeling of riding in a sports car.

In this way, the vibrator 21, which was initially installed as a safety function, can also be used for entertainment purposes by updating the software (control program) stored in the ECU 10 via OTA.

Furthermore, in order to vibrate the vibrator 21 in accordance with the audio data, it is desirable to provide a connection circuit that connects the headrest speaker 32 and the vibrator 21 and a filtering circuit that extracts a specific frequency. That is, it is preferable that, when the vehicle is purchased, the programs for operating these circuits are not included in the first control program, but are included in the second control program, so that the connection circuit and the filtering circuit can be used. In this way, it is possible to add a function of vibrating in conjunction with music or a virtual engine sound by updating to the second control program without replacing the vibration ECU circuit 20.

FIG. 5 shows a block diagram of the vibration ECU circuit 20. The vibration ECU circuit 20 includes a CAN transceiver 22, an EEPROM (Electrically Erasable Programmable Read-Only Memory) 23, an MCU (Micro Controller Unit) 24, a DAC (Digital Analog Converter) 25, a relay 26, and an amplifier circuit 28 (AMP). The vibration ECU circuit 20 is provided with a filtering circuit 27. Each component is configured to obtain power from a power supply circuit 29 and be driven thereby.

The EEPROM 23 stores programs and data for controlling the vibration ECU circuit 20 and the like. The MCU 24 reads a program from the EEPROM 23, and transmits a control signal to the vibrator 21 via the DAC 25 and the AMP 28 based on the warning information received by the CAN transceiver. The vibrator 21 that receives the signal can vibrate to give a warning to the occupant.

In the initial state, no audio data is input to the vibration ECU circuit 20, and the filtering circuit 27 does not function. When the second control program P2 is updated, audio data of music and virtual engine sounds is input to the vibration ECU circuit 20, and the filtering circuit 27 starts to function. A specific frequency is extracted from the audio data by the filtering circuit 27. After extraction, the vibrator 21 can be vibrated in conjunction with the sound of the specific frequency due to the switching of the relay.

The device that outputs sounds such as music and virtual engine sounds is not limited to the headrest speaker 32, but may be the speaker 31 mounted on an interior part such as a conveyance door D or an instrument panel.

### <Second embodiment>

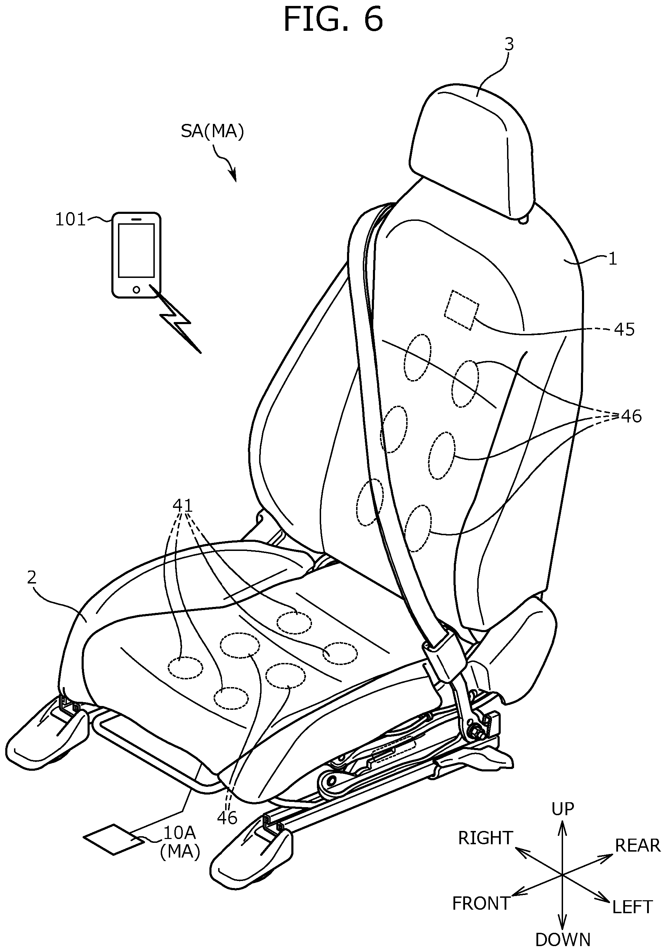

As a second embodiment, a case in which an electrical component is the seat belt reminder 41 provided in a conveyance seat SA will be described with reference to FIGS. 6 to 8.

The conveyance seat SA includes the seat back 1, the seat cushion 2, and the headrest 3 as shown in FIG. 6 similar to the conveyance seat S of the first embodiment.

The seat belt reminder 41 is a pressure sensor such as a membrane switch that detects the load applied when the occupant H is seated, and is connected to an ECU 10A mounted in a conveyance VA.

The seat belt reminder 41 has a function of only detecting the load of the occupant as its first function in the initial state, and when the load is detected, the ECU 10A is configured to issue a warning to the seated occupant if the seat belt is not fastened. The warning is given by emitting a warning sound via the speaker 31 mounted on the conveyance VA or by displaying a warning screen on the monitor 33.

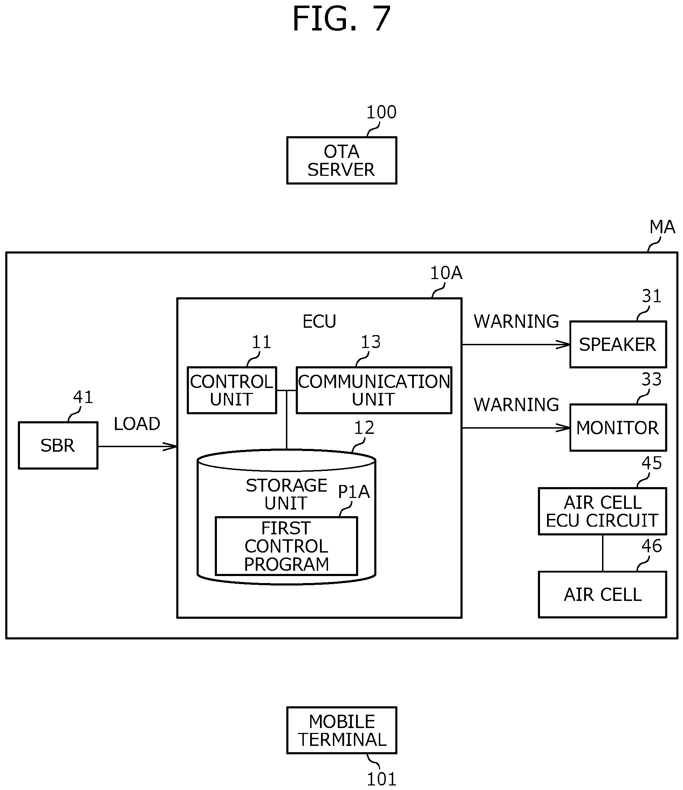

More specifically, as shown in FIG. 7, a conveyance interior device MA includes the seat belt reminder 41, which is an electrical component provided in the conveyance seat SA, the ECU 10A, the speaker 31, and the monitor 33. The ECU 10A controls the seat belt reminder 41 as a device that executes the function (first function) of detecting the load of the occupant seated on the conveyance seat SA by a first control program P1A initially stored in the storage unit 12.

That is, at the time of purchase, the conveyance seat SA is equipped with the seat belt reminder 41 that can be used as a safety function.

Further, the seat back 1 of the conveyance seat SA is provided with an air cell device 46 for kneading the occupant H. The air cell device 46 is controlled by an air cell ECU circuit 45 mounted on the conveyance seat SA, and is capable of kneading (massaging) the occupant H upon request.

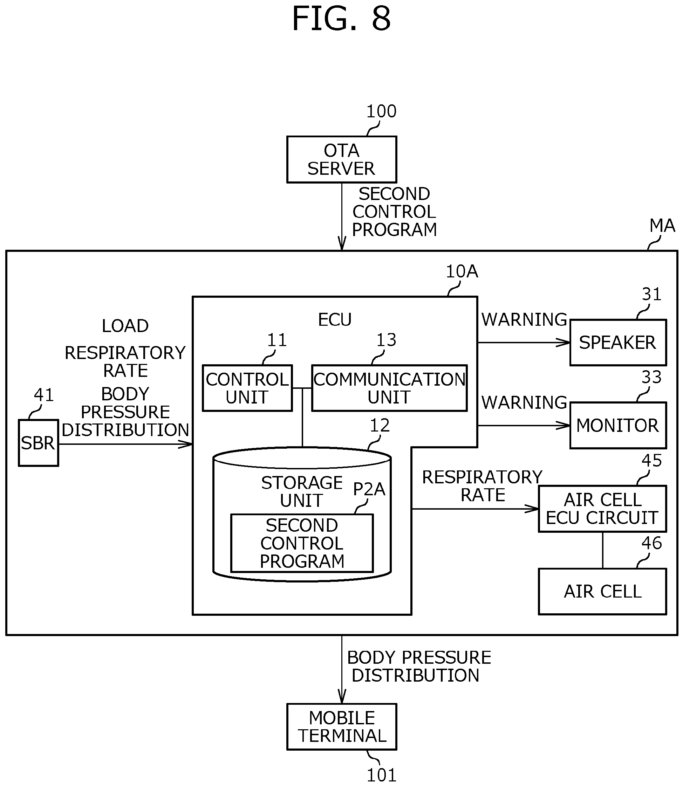

Then, if the occupant (the owner of the conveyance VA) desires to update the function of the seat belt reminder 41 after purchasing the conveyance VA, as shown in FIG. 8, the ECU 10A downloads a second control program P2A from the OTA server 100 via wireless communication by the communication unit 13. Then, the first control program P1A stored in the storage unit 12 is updated to the second control program P2A.

The second control program P2A is provided with an additional second function, which is a function for measuring the respiratory rate of the occupant H based on the body movement of the occupant H or a function for measuring the body pressure distribution of the occupant H. In other words, even after the update, the load detection function that is originally installed, respiratory rate measurement function, and body pressure distribution measurement function are configured to coexist.

### <Body movement detection>

Since the seat belt reminder 41 of the conveyance interior device MA is composed of a pressure sensor such as a membrane switch, the body movement of the occupant H can be detected even after the load of the occupant H is detected. When updated to the second control program P2A, the control unit 11 can detect the respiratory rate of the occupant H from the body movements of the occupant H and determine the relaxation degree of the occupant H by comparing the respiratory rate with a predetermined threshold value.

Since the normal respiratory rate is about 12 to 20 times per minute, if the respiratory rate is greater than 20 times per minute, for example, the ECU 10A can determine that the occupant H is irritated.

That is, the relaxation degree of the occupant, which indicates the physical condition of the occupant, can be determined by measuring the respiratory rate. If the relaxation degree is deteriorating, the air cell device 46 can be operated to knead and relax the occupant's body, thereby relieving the tension in the body.

The relaxation degree can be determined not only from the respiratory rate but also from the heart rate. The heart rate can be detected from the body movement caused by the thigh artery. In the case of the heart rate, the relaxation degree is also determined by comparing the heart rate per minute with a threshold value.

The kneading (massage) for the occupant H is performed by inflating and deflating the air cell device 46 provided in the seat back 1 or the seat cushion 2. The kneading may be performed automatically when the relaxation level of the occupant H deteriorates. Furthermore, the kneading may be performed only if the occupant H gives permission after permission is requested before the kneading.

In this way, the occupant H who is the owner of the conveyance VA can add health functions by updating the first control program P1A to the second control program P2A after purchase.

### <Body pressure detection>

The conveyance interior device MA may detect a rough body pressure distribution using the seat belt reminder 41. Specifically, the seat belt reminder 41 is configured with four membrane switches arranged in the front, rear, right and left of the seat cushion 2, and can determine whether or not there is an imbalance in body pressure in the front to rear or right to left direction. For example, the load value when the occupant is seated in a balanced state is stored as a reference value, and the load value measured by the membrane switch is calculated to see how much higher or lower the load value is from the reference value, thereby determining whether or not there is an imbalance in body pressure.

At this time, the conveyance interior device MA may transmit the body pressure distribution to a mobile terminal 101 (smartphone, tablet, etc.) carried by the occupant H via wireless communication by the communication unit 13. Further, the conveyance interior device MA may transmit the body pressure distribution data to a navigation system installed in the conveyance V. The ECU 10A causes the detected body pressure distribution to be displayed on the monitor 33 inside the vehicle.

By displaying the body pressure distribution on the screen of the mobile terminal 101 or the monitor 33 of the navigation system through the application, the user can check his or her posture. At this time, the mobile terminal 101 may display advice for improving posture on the screen based on the body pressure distribution. By displaying one's posture graphically, the user can easily check his or her posture.

### <Third embodiment>

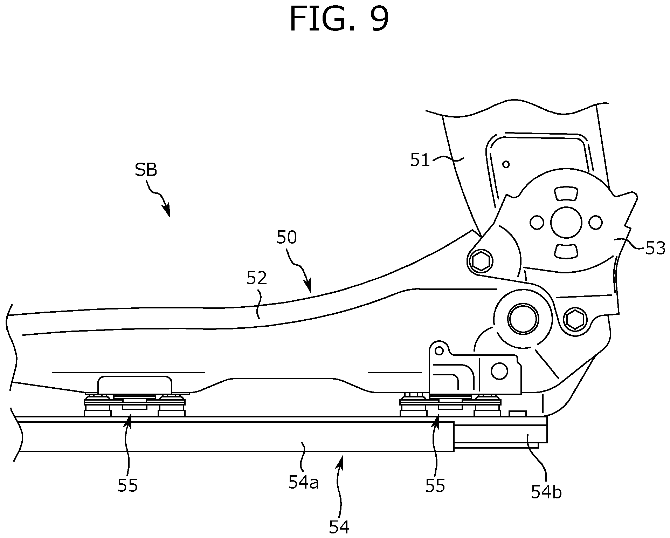

As a third embodiment, a case in which an electrical component of a conveyance interior device MB is a seat weight sensor 55 provided on a conveyance seat SB will be described with reference to FIGS. 9 to 11.

The conveyance seat SB in which the seat weight sensor 55 is provided is composed of the seat back 1, the seat cushion 2, and the headrest 3 similar to the conveyance seat S of the first embodiment and the conveyance seat SA of the second embodiment.

As shown in FIG. 9, a seat frame 50 is provided in the conveyance seat SB of the conveyance interior device MB. The seat frame 50 includes a back frame 51 that forms the framework of the seat back 1 and a cushion frame 52 that forms the framework of the seat cushion 2. The lower end of the back frame 51 and the rear end of the cushion frame 52 are connected by a reclining device 53.

A slide device 54 is provided below the cushion frame 52, and an upper rail 54b slides on a lower rail 54a, thereby changing the position of the conveyance seat SB.

As shown in FIG. 9, the seat weight sensor 55 is provided between the cushion frame 52 and the upper rail 54b, and is configured to detect the load of the occupant by receiving a load from the seat cushion 2 when the occupant is seated. The conveyance seat SB is configured to warn the occupant that the seat belt is not fastened when the seat weight sensor 55 detects a load. The warning is given by emitting a warning sound through the speaker 31 mounted on the conveyance V or by displaying a warning screen on the monitor 33 similar to the seat belt reminder 41 of the second embodiment.

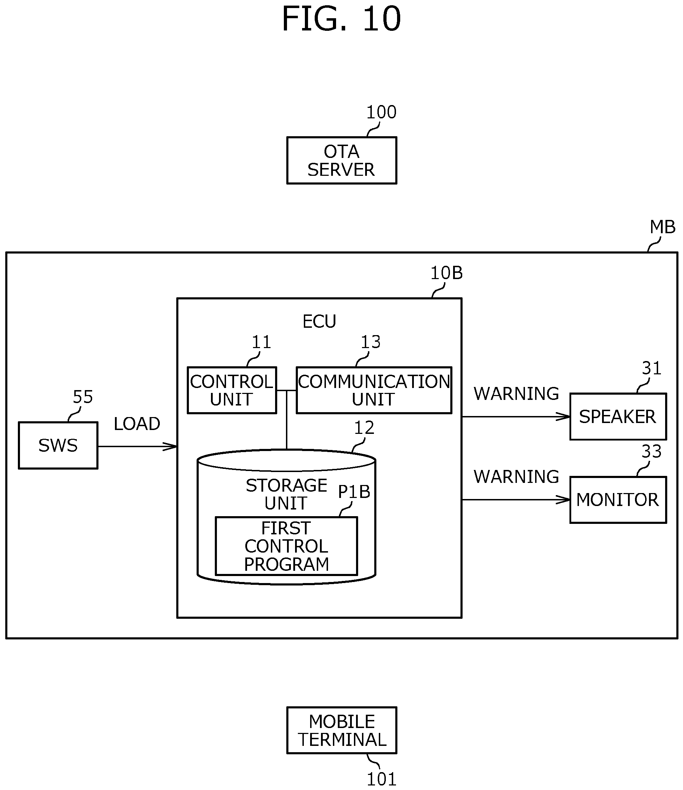

More specifically, as shown in FIG. 10, the conveyance interior device MB includes the seat weight sensor 55, which is an electrical component provided on the conveyance seat SB, an ECU 10B, the speaker 31, and the monitor 33. The ECU 10B controls the seat weight sensor 55 as a device that executes a function (first function) of detecting the load of the occupant seated on the conveyance seat SB by a first control program P1B initially stored in the storage unit 12.

That is, at the time of purchase, the conveyance seat S is equipped with the seat weight sensor 55 that can be used as a safety function.

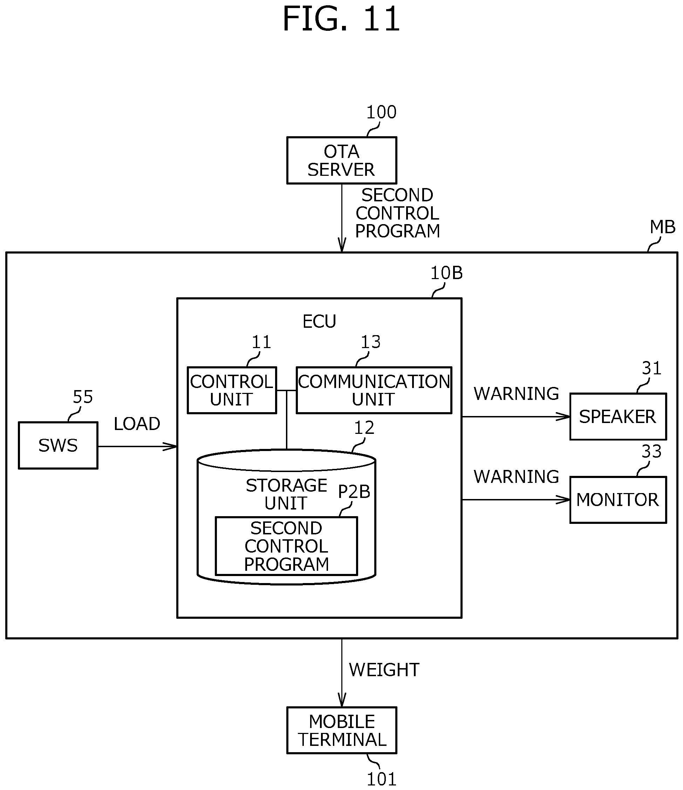

Then, if the occupant H who is the owner desires to update the function of the seat weight sensor 55 after purchasing the conveyance VB, as shown in FIG. 11, the ECU 10B downloads the second control program P2A from the OTA server 100 via the communication unit 13 by wireless communication. Then, the ECU 10B updates the first control program P1A stored in the storage unit 12 to the second control program P2A.

In the second control program P2A, the control unit 11 is programmed to estimate the weight from the load data received from the seat weight sensor 55.

That is, the control unit 11 of the ECU 10B controls the seat weight sensor 55 to estimate the weight of the occupant seated on the conveyance seat (second function) by the second control program P2A.

The second function may include a function for transmitting data on the weight of the occupant H, estimated by the control unit 11 of the ECU 10B based on the load detected by the seat weight sensor 55, to the mobile terminal 101 of the occupant H (user), such as a smartphone or tablet via the communication unit 13.

The ECU 10B sends the estimated weight to the mobile terminal 101 so that the daily weight change is recorded in the mobile terminal 101.

The weight data of the occupant H may be transmitted not only to the mobile terminal 101 but also to a navigation system installed in the conveyance.

Further, the conveyance interior device MB may display diet advice on the screen of the mobile terminal 101 or on the monitor 33 of the conveyance VB using an application based on changes in weight recorded in the mobile terminal 101 or the navigation system.

In this way, after purchasing the conveyance VB, the occupant H who is the owner of the conveyance VB can add health functions by updating the first control program P1B to the second control program P2B.

Furthermore, when estimating the weight using the seat weight sensor 55, since the seated occupant usually has his or her feet on the floor, it is difficult to directly use the load value measured by the seat weight sensor 55 as the weight, and a correction must be made by a program. Further, since the weight is inaccurate, for example, the occupant may be notified of only the difference from the previous measurement. In this case, it is possible to estimate a weight closer to the actual weight by having the occupant input his or her accurate weight initially.

### <Purchase of second control program>

The update from the first control programs P1 to P1B to the second control programs P2 to P2B shown in the first to third embodiments may be conducted by the occupant H (user), who is the owner of the conveyances V to VB, purchasing the second control programs P2 to P2B.

Further, the occupant H may be allowed to use the second control programs P2 to P2B only while he or she is paying for the subscription service. In this case, when the period for receiving the subscription service ends, the second control programs P2 to P2B are deleted, or the second function is turned off and only the first function is operated.

The second control programs P2 to P2B for realizing the second function may be purchased from the mobile terminal 101 such as a user's smartphone or tablet. Further, the occupant H may be able to purchase the second control programs P2 to P2B through an in-vehicle interface (for example, the monitor 33 of the navigation system).

The conveyance interior device and the conveyance having the electrical component according to the embodiment of the present invention have been described above with reference to the drawings. Furthermore, although the conveyance seat has been given as an example of the interior member, the interior member may be a conveyance door or an instrument panel, and the electrical component may be a device (such as a monitor or a sensor) provided in the conveyance door or the instrument panel.

When the electrical component is a conveyance door speaker or a headrest speaker, the electrical component only has a music playing function (entertainment function) as its first function, but a function (second function, safety function) of notifying the driver of approaching vehicles from the right and left by sound may be added by updating to the second control program.

Further, when the electrical component is an air cell device, the electrical component only has a massage function (first function, comfort function) in the initial state, but a posture correction function (second function, health function) may be added by updating to the second control program. For example, if the occupant has a hunched back, the air cell device corresponding to the upper part of the pelvis may be inflated to correct the posture.

Further, when the electrical component is an AVS (air ventilation system) that blows or sucks air from the surface of the conveyance seat, the electrical component only has the function of suppressing stuffiness (first function, comfort function) in the initial state, but a function of waking the user up by blowing cool air (second function, safety function) may be added by updating to the second control program. In this case, for example, a seat belt reminder, which is a biological sensor, detects drowsiness of the occupant and activates a function for waking up from drowsiness (second function).

Further, the present invention is not limited to ground conveyances having wheels such as automobiles and trains, or conveyance interior members mounted thereon, and can also be applied to conveyances that move in environments other than the ground, such as aircraft and ships, and conveyance interior members mounted thereon.

### REFERENCE SIGNS LIST

V, VA, VB: Conveyance
H: Occupant
M: Conveyance interior device
D: Conveyance door
S, SA, SB: Conveyance seat (interior member)
1: Seat back
2: Seat cushion
3: Headrest
10, 10A, 10B: ECU (control device)
11: Control unit
12: Storage unit
13: Communication unit
P1, P1A, P1B: First control program
P2, P2A, P2B: Second control program
20: Vibration ECU circuit
21: Vibrator (electrical component)
22: CAN transceiver
23: EEPROM
24: MCU
25: DAC
26: Relay
27: Filtering circuit
28: Amplifier circuit
29: Power supply circuit
31: Speaker
32: Headrest speaker
33: Monitor
41: Seat belt reminder (electrical component)
45: Air cell ECU circuit
46: Air cell device
50: Seat frame
51: Back frame
52: Cushion frame
53: Reclining device
54: Slide device
54a: Lower rail
54b: Upper rail
55: Seat weight sensor (electrical component)
100: OTA server
101: Mobile terminal

## Claims

1. A conveyance interior device mounted on a conveyance, comprising:
an interior member;
at least one electrical component provided in the interior member; and
a control device,
wherein the control device includes a control unit controlling the electrical component, a storage unit, and a communication unit,
wherein the storage unit stores a first control program for controlling the electrical component as a device that executes a first function,
wherein the control unit controls the electrical component as a device that executes the first function by the first control program in an initial state, and
wherein when the first control program is updated to a second control program based on data received from a server provided outside the conveyance via the communication unit, the control unit controls the electrical component as a device that executes a second function different from the first function by the second control program.

2. The conveyance interior device according to claim 1,
wherein the second function is a function that provides an effect different from that of the first function.

3. The conveyance interior device according to claim 1,
wherein the interior member is a conveyance seat, and
wherein the electrical component is provided in the conveyance seat.

4. The conveyance interior device according to claim 3,
wherein the electrical component is a vibrator provided in the conveyance seat,
wherein the first function is a function that notifies an occupant seated on the conveyance seat of information by vibration, and
wherein the second function is a function that vibrates in conjunction with a sound played inside the conveyance.

5. The conveyance interior device according to claim 4,
wherein the conveyance seat includes a headrest speaker provided in a headrest, and
wherein the second function has a function of vibrating in conjunction with a sound output from the headrest speaker.

6. The conveyance interior device according to claim 3,
wherein the electrical component is a seat belt reminder,
wherein the first function is a function of detecting a load of an occupant seated on the conveyance seat, and
wherein the second function is a function of measuring a respiratory rate of the occupant from the body movement of the occupant or a function of measuring a body pressure distribution of the occupant.

7. The conveyance interior device according to claim 6,
wherein the conveyance seat includes an air cell device for kneading the occupant, and
wherein the second function includes a function of measuring a respiratory rate of the occupant from the body movement of the occupant using the seat belt reminder and kneading the occupant based on the measured respiratory rate using the air cell device.

8. The conveyance interior device according to claim 6,
wherein the second function includes a function of measuring a body pressure distribution of the occupant using the seat belt reminder and transmitting the measured body pressure distribution to a mobile terminal carried by the occupant via the communication unit.

9. The conveyance interior device according to claim 3,
wherein the electrical component is a seat weight sensor,
wherein the first function is a function of detecting a load of an occupant seated on the conveyance seat, and
wherein the second function is a function of estimating a weight of the occupant seated on the conveyance seat.

10. The conveyance interior device according to claim 9,
wherein the second function includes a function of transmitting the weight of the occupant estimated by the seat weight sensor to a mobile terminal carried by the occupant via the communication unit.

11. A conveyance, comprising:
the conveyance interior device according to any one of claims 1 to 10.
